# DEMANDE DE BREVET EUROPEEN

(11) **EP 1 674 315 A1**
(43) Date de publication de la demande: **28.06.2006**
(21) Numéro de dépôt: 05292629.2
(22) Date de dépôt: 09.12.2005
(51) Int. Cl.: B60J 7/02

(54) **Toit escamotable pour véhicule comprenant un dispositif de transmission de mouvement**

(30) Priorité: 24.12.2004 FR 0453230
(71) Demandeur: Heuliez, 79140 Cerizay (FR)
(72) Inventeur: Queveau, Gérard, 79140 Le Pin (FR); Queveau, Paul, 79140 Montravers (FR); Guillez, Jean-Marc, 79140 Cirieres (FR)
(74) Mandataire: Breese, Pierre

(57) **Abrégé**

Toit escamotable pour véhicule comprenant au moins un élément de toit avant (4) et un élément de toit arrière (3), ces au moins deux éléments étant mobiles entre une position de recouvrement dans laquelle ils recouvrent l'habitacle du véhicule et une position de rangement dans laquelle ils sont repliés dans le coffre arrière du véhicule, le toit comprenant également deux bras pivotants (1,2) montés pivotants selon des axes de rotation (9,10) sur l'élément arrière (3) de toit entre la position longitudinale où ils s'étendent entre l'extrémité avant de l'élément arrière (3) et l'arrière du pare-brise de part et d'autre et le long de l'élément de toit avant (4), et la position transversale où ils se chevauchent transversalement par rapport au plan de symétrie du véhicule, caractérisé en ce qu'il comporte un dispositif de transmission (11) du mouvement de l'élément de toit arrière (3) aux bras pivotants (1,2), ledit dispositif de transmission (11) étant agencé de sorte à permettre de façon réversible le mouvement des bras pivotants (1,2) entre leurs positions longitudinales et leurs positions transversales lors du mouvement du toit entre ses positions de recouvrement et de rangement

## Description

L'invention concerne un toit escamotable pour véhicule et un véhicule comprenant un tel toit.

Un tel toit permet notamment de transformer un véhicule du type coupé ou berline en un véhicule du type cabriolet.

L'invention s'applique plus particulièrement à un toit escamotable pour véhicule comprenant au moins un élément de toit avant, un élément de toit arrière et deux bras pivotants selon des axes de rotation sur l'élément arrière de toit. Les éléments de toit arrière et avant sont mobiles entre une position de recouvrement dans laquelle ils recouvrent l'habitacle du véhicule et une position de rangement dans laquelle ils sont dans le coffre arrière. Dans leur position **longitudinale (position de recouvrement), les bras pivotants s'étendent entre** l'extrémité avant de l'élément arrière et l'arrière du pare-brise, alors que dans leur position transversale (position de rangement), ils se chevauchent transversalement par rapport au plan de symétrie du véhicule.

On connaît du document FR-2 845 949 un toit escamotable de ce type.

L'avantage de ce type de toit escamotable est de limiter la hauteur de l'empilement des éléments de toit en s'affranchissant de la contrainte imposée par la hauteur des zones latérales.

Cependant, ce type de toit a l'inconvénient de nécessiter l'utilisation d'actionneurs, relativement chers, pour commander le mouvement de pivotement des bras au cours d'un mouvement de rangement ou de déploiement du toit.

L'invention a pour but de résoudre ce problème en proposant une commande simple, économique et fiable du pivotement des bras lors d'un mouvement de rangement ou de déploiement du toit. La commande de pivotement des bras, est simple car elle utilise la transmission du mouvement d'un élément du toit aux bras latéraux.

A cet effet, et selon un premier aspect, l'invention propose un toit escamotable pour véhicule comprenant au moins un élément de toit avant et un élément de toit arrière, ces au moins deux éléments étant mobiles entre une position de recouvrement dans laquelle ils recouvrent l'habitacle du véhicule et une position de rangement dans laquelle ils sont repliés dans le coffre arrière du véhicule, le toit comprenant également deux bras pivotants montés pivotants selon des axes de rotation sur l'élément arrière de toit entre la position longitudinale où ils s'étendent entre l'extrémité avant de l'élément arrière et l'arrière du pare-brise de part et d'autre et le long de l'élément de toit avant, et la position transversale où ils se chevauchent transversalement par rapport au plan de symétrie du véhicule caractérisé en ce qu'il comporte un dispositif de transmission du mouvement de l'élément de toit arrière aux bras pivotants, ledit dispositif étant agencé de façon à permettre de façon réversible, le mouvement des bras pivotants lors du mouvement du toit entre ses positions de recouvrement et de rangement.

Ainsi, la commande du mouvement des bras est simple puisque c'est le mouvement de l'élément de toit arrière qui est transmis aux bras et permet leur pivotement.

Un autre avantage résultant de l'invention est de permettre de faire varier l'amplitude de pivotement des bras, et donc leur vitesse en fonction de la position de l'élément de toit arrière au cours de son mouvement.

Ainsi, selon l'invention, le dispositif de transmission pourra être adapté pour limiter la vitesse de pivotement des bras dans des zones du début et/ou de fin de mouvement de l'élément arrière du toit. En effet dans ces zones, il existe des risques d'interférences entre les bras pivotants et un élément extérieur (corps humain, plafond, ...) ou entre les bras et des éléments du véhicule (éléments de toit, coffre...).

Les autres caractéristiques de l'invention résultent de la description qui suit d'un mode de réalisation, description effectuée en référence aux figures annexées dans lesquelles :
- La figure 1 est une vue de côté des éléments de toit et du dispositif de transmission du mouvement de l'élément de toit arrière au bras pivotant ;
- La figure 2 est une vue de dessus du dispositif de transmission et d'un bras levier ;
- Le figure 3 est une vue de côté agrandie du dispositif de transmission.

En relation avec les figures, on décrit un mode de réalisation détaillée de l'invention.

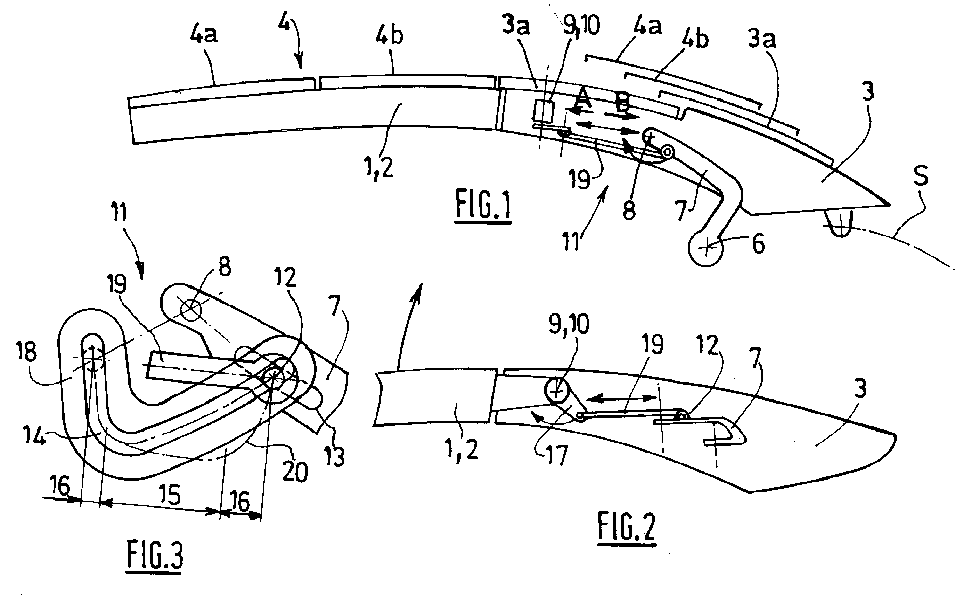

La figure 1 représente une vue de côté des éléments 1, 2, 3, 4 de toit et du dispositif de transmission 11 du mouvement de l'élément de toit arrière 3 aux bras pivotants 1,2. Le véhicule comprend notamment un élément de toit arrière 3 et au moins un élément de toit avant 4.

Bien qu'il soit représenté deux éléments de toits avant 4a, 4b, rigides sur la figure 1, il est important de noter que l'invention s'applique quel que soit le nombre et le type d'éléments de toit avant 4. En effet, ceux-ci peuvent être rigides, souples ou composés de lamelles,... lls peuvent être coulissants ou articulés entre eux. De même, dans leur position de rangement, le ou les élément(s) de toit avant 4 peuvent indifféremment se ranger au-dessus , comme représenté à la partie droite de la figure 1, ou en dessous de l'élément de toit arrière 3.

Le déplacement de l'élément de toit arrière 3 est commandé d'une part par une glissière 5 s'étendant à l'intérieur du coffre arrière dans laquelle est engagé un doigt solidaire de la partie arrière de l'élément arrière 3 et d'autre part par un bras levier 7 articulé en un point fixe 6 de la carrosserie du véhicule et articulé à un point fixe 8 de l'élément de toit arrière 3.

En position de recouvrement, deux bras pivotants 1,2 s'étendent le long des côtés latéraux du ou des élément(s) de toit avant 4 entre l'avant de l'élément de toit arrière 3 et l'arrière du pare-brise du véhicule.

Les bras 1,2 sont montés pivotants selon chacun un axe de rotation 9,10 situé sur l'avant de l'élément de toit arrière 5. Les axes de rotation sont non parallèles, le mouvement des bras 1,2 se fait donc dans deux plans distincts de sorte que les bras 1,2 peuvent se chevaucher lorsqu'ils sont rangés en position transversale.

Lors de l'escamotage du toit, les deux bras 1,2 pivotent autour de leur axe de rotation 9,10 d'une position longitudinale à une position transversale.

**Nous nous attacherons désormais à détailler le dispositif de transmission du** mouvement 11 en faisant plus particulièrement référence aux figures 2 et 3.

Dans le mode de réalisation détaillé ci après, le dispositif de transmission 11 est composé de deux parties latérales symétriques, chacune transmettant le mouvement à un bras pivotant 1,2. Nous ne détaillerons donc ici que le fonctionnement d'une partie latérale. Dans un autre mode de réalisation possible, le dispositif de transmission 11 du mouvement peut n'être disposé que sur une seule partie latérale du véhicule.

Une bielle 19 est articulée à ces deux extrémités.

A une extrémité, la bielle 19 est articulée par un maneton 12 coulissant dans une glissière 13 du bras levier 7. La glissière 13 du bras levier 7 est située au voisinage de son articulation 8 avec l'élément arrière 3.

A son autre extrémité, la bielle 19 est articulée sur une patte de commande 17 du bras 1 située au voisinage de son axe de rotation 9. Lors de l'escamotage du toit, la bielle 19 se déplace selon une direction A par rapport à l'élément de toit arrière et pousse la patte de commande 17 qui effectue alors une rotation autour de l'axe de rotation 9 du bras 1 et transmet ainsi le mouvement au bras pivotant 1.

Selon le mode de réalisation détaillé, le maneton 12 coulisse également dans une glissière 14 disposée sur une came 18 solidaire de l'élément de toit arrière 3. La glissière 14 de l'élément de toit arrière 3 présente une courbure particulière permettant de faire varier la vitesse de pivotement du bras 1 en fonction de la position de l'élément de toit arrière 3 au cours de son mouvement.

Lorsque le toit est dans sa position de recouvrement, le maneton 12 se situe à l'extrémité arrière de la glissière 14 solidaire de l'élément de toit arrière 3.

Lors de l'escamotage du toit, le bras levier 7 effectue une rotation dans le sens horaire autour de son axe d'articulation 8 sur l'élément de toit arrière 3. Cette rotation entraîne le mouvement de la bielle 19 selon la direction A.

Au début du mouvement d'escamotage du toit, des interférences avec les bras pivotants 1,2 sont possibles. Il peut alors s'agir d'interférences avec des personnes occupant le véhicule ou bien avec les éléments de toits non encore retirés des bras. Pour diminuer les risques d'interférences, le dispositif de transmission 11 du mouvement limite l'amplitude de pivotement des bras 1,2 dans cette zone.

Pour cela, au début du mouvement d'escamotage du toit, le mouvement de rotation du bras levier 7 par rapport à son axe d'articulation 8 sur l'élément de toit arrière 3 provoque le coulissement du maneton 12 dans une zone à faible pivotement 16' de la glissière 13 du bras levier 7. La glissière 13 permet ainsi de limiter le mouvement de la bielle 19 selon la direction A, relativement à l'élément de toit arrière 3. Ainsi, la bielle 19 transmet une faible amplitude de mouvement à la patte de commande 17 du bras pivotant 1. Le mouvement des bras pivotants 1,2 est donc limité ou nul, de telle sorte que les bras 1,2 commencent leur mouvement dans un plan longitudinal sensiblement vertical.

De même, vers la fin du mouvement d'escamotage du toit, des interférences entre les bras pivotants 1,2 et des éléments du véhicule sont possibles. Il peut s'agir d'une interférence avec le capot de coffre qui est ouvert de l'avant vers l'arrière ou avec l'ouverture de passage du toit vers le coffre ou bien encore avec les cloisons du coffre. Pour diminuer les risques dans cette zone, le dispositif de transmission 1 du mouvement limite le mouvement de pivotement des bras 1,2 dans cette zone.

Pour cela, vers la fin de mouvement d'escamotage du toit, alors que les bras sont déjà dans leur position transversale, le maneton 12 coulisse dans la zone à faible pivotement 16 de la glissière 14 solidaire de l'élément de toit arrière 3. Dans cette zone, le mouvement de la bielle 19 dans la direction A, relativement à l'élément de toit arrière 3 est limité. Par conséquent, la bielle 19 transmet une faible amplitude de mouvement à la patte de commande 17 du bras pivotant 1 et l'amplitude de mouvement des bras 1,2 dans cette zone est limitée.

Dans une zone intermédiaire de mouvement du toit, les risques d'interférences sont moindres, l'amplitude et la vitesse de pivotement des bras pivotants peuvent donc être beaucoup plus importantes.

Pour cela, dans cette zone intermédiaire de mouvement du toit, le maneton 12 coulisse dans la zone à fort pivotement 15 de la glissière 14 solidaire de l'élément de toit arrière 3. Ainsi, le mouvement de la bielle 11 selon la direction A, relativement à l'élément de toit arrière 3 est maximum. L'amplitude de pivotement des bras 1,2, et donc la vitesse est beaucoup plus importante dans cette zone.

Il faut remarquer que lors d'un mouvement de toit, le maneton 12 suit une courbe 20 dont le profil résulte de la combinaison des mouvements relatifs des glissières 13 et 14. On observera sur cette courbe 20 les deux zones à faible pivotement 16,16' ainsi que la zone à fort pivotement 15.

D'autres types d'interférences avec les bras pivotants 1,2 peuvent également être rencontrés, notamment avec un plafond. Dans ce cas il faudra prévoir d'effectuer le pivotement des bras 1,2 avant et/ou après le passage sous le plafond. Pour cela, la forme de la glissière 14 solidaire de l'élément arrière 3 pourra être adaptée.

Bien évidemment, bien que le fonctionnement du dispositif de transmission 11 du mouvement du toit aux bras pivotants 1,2 soit détaillé uniquement pour le mouvement d'escamotage du toit, la transmission du mouvement est également réalisée durant le déploiement du toit.

En effet, lors du déploiement du toit, le bras levier 7 effectue une rotation dans le sens anti-horaire autour de son axe d'articulation 8 sur l'élément de toit arrière 3. Cette rotation entraîne le mouvement de la bielle 19 selon la direction B, opposé à la direction A, relative à l'élément de toit arrière 3.

Ainsi, au début du mouvement de déploiement du toit, le mouvement de rotation du bras levier par rapport à son l'axe d'articulation 8 provoque le mouvement du maneton 12 dans la zone à faible pivotement 16 de la glissière 14 solidaire de l'élément arrière 3. La glissière 14 permet ainsi de limiter le mouvement de la bielle 19 selon la direction B. Ainsi, la bielle 19 transmet une faible amplitude de mouvement à la patte de commande 17 du bras pivotant 1.

De même, à la fin du mouvement de déploiement du toit, le maneton 12 coulisse dans la glissière 13 du bras levier 7. La glissière 13 permet ainsi de limiter le mouvement de la bielle 19 selon la direction B. Ainsi la bielle 19 transmet une faible amplitude de mouvement à la patte de commande 17 du bras pivotant 1. Le mouvement des bras pivotants 1,2 est donc limité voire annulé, de telle sorte que les bras 1,2 finissent leur mouvement dans un plan longitudinal sensiblement vertical.

## Revendications

1. Toit escamotable pour véhicule comprenant au moins un élément de toit avant (4) et un élément de toit arrière (3), ces au moins deux éléments étant mobiles entre une position de recouvrement dans laquelle ils recouvrent l'habitacle du véhicule et une position de rangement dans laquelle ils sont repliés dans le coffre arrière du véhicule, le toit comprenant également deux bras pivotants (1,2) montés pivotants selon des axes de rotation (9,10) sur l'élément arrière (3) de toit entre une position longitudinale où ils s'étendent entre l'extrémité avant de l'élément arrière (3) et l'arrière du pare-brise de part et d'autre et le long de l'élément de toit avant (4), et une position transversale où ils se chevauchent transversalement par rapport au plan de symétrie du véhicule, **caractérisé en ce qu'**il comporte un dispositif de transmission (11) du mouvement de l'élément de toit arrière (3) aux bras pivotants (1,2), ledit dispositif de transmission (11) étant agencé de sorte à permettre de façon réversible le mouvement des bras pivotants (1,2) entre leurs positions longitudinales et transversales lors du mouvement de l'élément de toit arrière entre ses positions de recouvrement et de rangement.

2. Toit escamotable selon la revendication 1, **caractérisé en ce que** le dispositif de transmission (11) permet de faire varier la vitesse de pivotement des bras (1,2) au cours du mouvement de l'élément de toit arrière entre ses positions de recouvrement et de rangement.

3. Toit escamotable selon la revendication 1 ou 2, **caractérisé en ce que** le dispositif de transmission (11) transmet aux bras (1,2) une faible amplitude de pivotement dans au moins une première zone (16,16') et une forte amplitude de pivotement dans une deuxième zone (15).

4. Toit escamotable selon la revendication 3, **caractérisé en ce que** la première zone se situe au début et/ou vers la fin du mouvement de l'élément de toit arrière (3).

5. Toit escamotable selon l'une quelconque des revendications précédentes dans lequel le déplacement de l'élément arrière (3) est commandé par au moins un bras levier (7) articulé à la carrosserie du véhicule et articulé audit élément arrière (3), **caractérisé en ce que** le dispositif de transmission (11) comprend une bielle (19) articulée d'une part sur le bras levier (7) au voisinage de son articulation avec l'élément arrière (3) et d'autre part à une patte de commande (17) de chacun des bras (1,2) située au voisinage de leur axes de rotation (9,10) respectifs.

6. Toit escamotable selon la revendication 5, **caractérisé en ce que** la bielle (19) est articulée par un maneton (12) coulissant dans une glissière (13) du bras levier (7).

7. Toit escamotable selon la revendication 6, **caractérisé en ce que** le maneton (12) coulisse également dans une glissière (14) solidaire de l'élément de toit **arrière (3) dont la courbure permet de faire varier la vitesse de pivotement** des bras (1,2) en fonction de la position de l'élément de toit arrière (3) au cours de son mouvement.

8. Véhicule automobile, **caractérisé en ce qu'**il comprend un toit escamotable selon l'une quelconque des revendications 1 à 7.
